# EUROPÄISCHE PATENTSCHRIFT

(11) **EP 0 597 820 B1**
(45) Veröffentlichungstag und Bekanntmachung des Hinweises auf die Patenterteilung: **25.01.1995**
(21) Anmeldenummer: 93890222.8
(22) Anmeldetag: 11.11.1993
(51) Int. Cl.: F16L 11/12, F16L 11/14, F24D 3/14

(54) **Heizungselement für Flächenheizung**
Heating element for surface heating
Elément chauffant pour chauffage de surface

(30) Priorität: 11.11.1992 AT 2222/92
(43) Veröffentlichungstag der Anmeldung: 18.05.1994
(73) Patentinhaber: HARREITHER GESELLSCHAFT m.b.H, A-3334 Gaflenz (AT)
(72) Erfinder: Ahrer, Hermann, A-3340 Waidhofen/Ybbs (AT)
(74) Vertreter: Schwarz, Albin, Dr. Kopecky & Schwarz Patentanwälte

(56) Entgegenhaltungen:
- GB-A- 1 394 404
- LU-A- 82 956
- LU-A- 83 656
- US-A- 3 314 449

## Beschreibung

Die Erfindung betrifft ein Heizungselement für Flächenheizung mit einem Hohlraum zum Transportieren des Wärmeträgermediums und einem den Hohlraum umschließenden Mantel aus Kunststoff und/oder Metall, sowie eine Flächenheizung, insbesondere eine Fußbodenheizung, welche im wesentlichen aus diesen Heizungselementen aufgebaut ist.

Aus der AT-B - 378.846 sind Heizungsrohre aus Metall oder Kunststoff mit rundem, ovalem oder elliptischem Querschnitt des rohrförmigen Hohlraums bekannt. Die Problematik der Flächenheizung, insbesondere der Fußbodenheizung, liegt an der an manchen Stellen unbehaglichen und nicht für jeden Menschen gleich angenehm empfundenen Oberflächentemperatur. Durch die bereits bekannten Heizungsrohre, eingebettet in abbindefähigem oder erhärtendem Medium, kommt es zu relativ großen Temperaturunterschieden, sogenannten Welligkeiten, an der beheizten Fläche. Dies wird oft als unangenehm empfunden. Außerdem entspricht es nicht den grundsätzlichen Anforderungen, die an eine Flächenheizung und an eine Fußbodenheizung im besonderen gestellt werden. Eine Flächenheizung sollte aufweisen:
- niedrige, auf der gesamten Oberfläche der beheizten Fläche gleiche Temperatur (aus medizinischen Gründen)
- niedrige Vorlauftemperatur (aus wirtschaftlichen Gründen)
- niedrige Temperatur nach unten (aus wirtschaftlichen Gründen).

Die Erfindung stellt sich daher die Aufgabe, ein Heizungselement mit einem Hohlraum zum Transportieren des Wärmeträgermediums und einem den Hohlraum umschließenden Mantel aus Kunststoff und/oder Metall vorzusehen, welches den Bau einer Flächenheizung, insbesondere einer Fußbodenheizung, erlaubt, die eine wesentlich verringerte Welligkeit auf der zu beheizenden Fläche besitzt.

Das erfindungsgemäße Heizungselement ist dadurch gekennzeichnet, daß der Mantel an jenen Bereichen, welche nach verlegen des Heizungselementes der zu beheizenden Fläche zu- bzw. abgewandt sind, stärker ausgeführt ist als an den anderen Bereichen, und/oder in diesen, der zu beheizenden Fläche zu- bzw. abgewandten Bereichen ein Material vorgesehen ist, welches ein schlechter Wärmeleiter ist.

Nach einer bevorzugten Ausführungsform des erfindungsgemäßen Heizungselementes wird dies dadurch erreicht, daß der Mantel verschiedene Stärken aufweist. Es hat sich gezeigt, daß die Wärmeabgabe auf einfache Weise dadurch gesteuert werden kann, daß das erfindungsgemäße Heizungselement an jenem Bereich, der nach Verlegung der Heizungselemente der zu beheizenden Fläche zugewandt ist, dicker, d.h. stärker, ausgeführt ist, verglichen mit jenen Bereichen, an denen die Heizungselemente nach Verlegung einander zugewandt sind.

Eine weitere bevorzugte Ausführungsform des erfindungsgemäßen Heizungselementes besteht darin, daß im Mantel desjenigen Bereiches, der nach Verlegung der Heizungselemente der zu beheizenden Fläche zugewandt sind, ein Material vorgesehen ist, welches ein schlechter Wärmeleiter ist, oder ein Material, das die Wärme schlechter leitet als jenes Material, aus dem der Mantel besteht. Dies kann zum Beispiel dadurch erreicht werden, daß im Mantel ein mit Luft gefüllter Isolierspalt vorgesehen ist.

Die erfindungsgemäßen Heizungselemente sind vorteilhafterweise im Querschnitt oval oder elliptisch ausgebildet, wobei der Hohlraum im Querschnitt am besten kreisförmig ausgebildet ist.

Die Erfindung betrifft auch eine Flächenheizung mit den erfindungsgemäßen Heizungselementen.

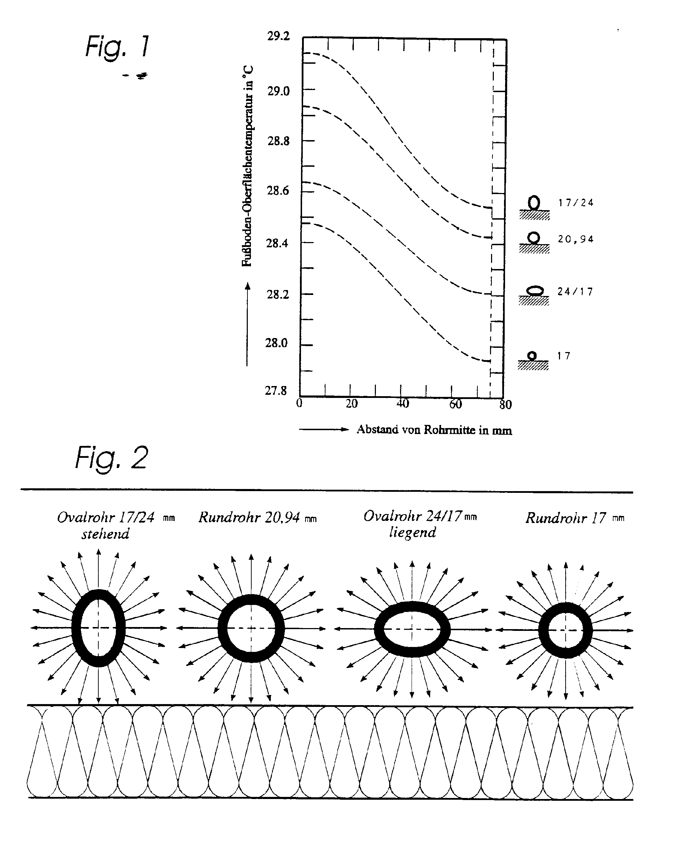

Das durch die vorliegende Erfindung zu lösende Problem und bevorzugte Ausführungsformen des erfindungsgemäßen Heizungselementes werden an Hand der Figuren 1 bis 7 näher erläutert.

In Fig. 1 sind für vier in Fig. 2 im Querschnitt schematisch dargestellte Heizungsrohre typische Temperaturen und Welligkeiten bei einer Rohrteilung t = 150 mm und bei einer Vorlauftemperatur von 40°C angegeben. Je nach Veränderung der Rohrteilung im Zusammenhang mit der Änderung der Vorlauftemperatur kann sich die Welligkeit noch wesentlich verstärken. Aus gesundheitlichen Gründen soll die Oberflächentemperatur der Fußbodenheizung unter der Oberflächentemperatur der Fußsohlen (diese kann nicht mit der Körpertemperatur gleichgesetzt werden) des menschlichen Körpers liegen, damit Wärme an den Boden abgegeben werden kann.

Die Erklärung der Welligkeiten aus Fig. 1 ist aus Fig. 2 ersichtlich, welche vier Heizungsrohre im Schnitt zeigt, die über einer Wärmedämmung (durch Schlangenlinie angedeutet) in einem Fußbodenmaterial, dessen Begrenzung mit waagrechten Linien angedeutet ist, verlegt sind. Jedes bekannte Rohr, egal welchen Querschnittes, gibt über die gesamte Oberfläche gleichmäßig die Wärme ab (Wärmeabstrahlung durch Pfeile dargestellt), sodaß unmittelbar über und unter dem Rohrscheitel bei den bisher bekannten Rohrquerschnitten die höchste und zwischen den Rohren die niedrigste Oberflächentemperatur am Fußboden und auf der Wärmedämmung auftritt.

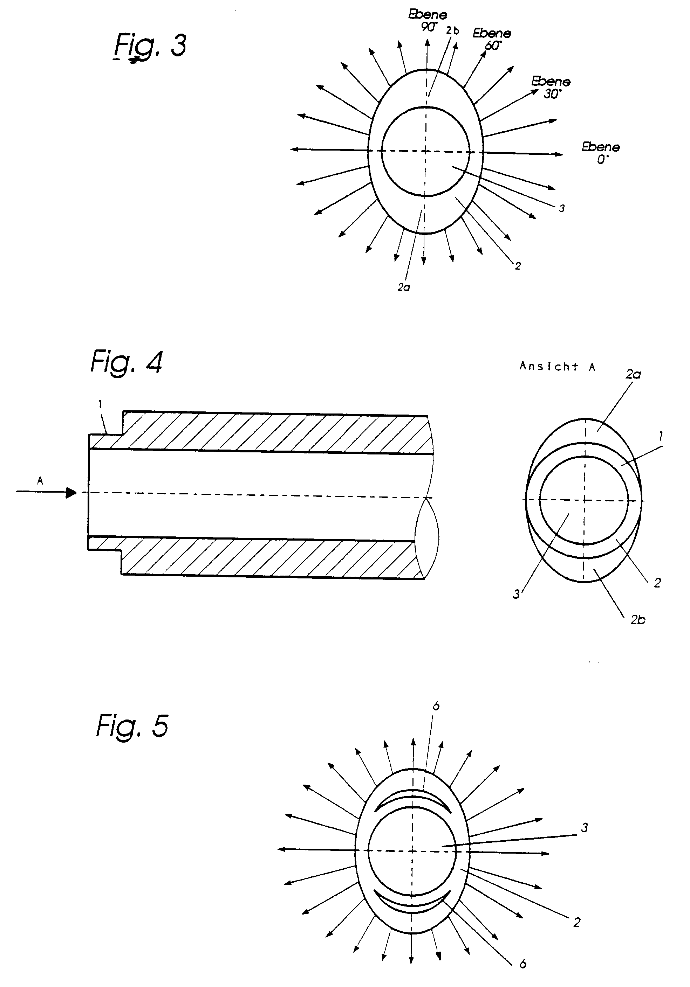

Fig. 3 zeigt ein erfindungsgemäßes Kunststoffrohr mit einem Hohlraum 3 mit kreisrundem Innenquerschnitt und mit nach oben und unten verstärkter Wand 2a, 2b. Die Rohrenden zum Verteileranschluß hin können gemäß Fig. 4 kreisrund angedreht sein, wodurch bekannte Schweiß- bzw. Quetsch- oder Schraubverbindungen sicher und einfach herstellt werden können. Ansicht A der Fig. 4 zeigt die Andrehung 1, die Wandverstärkung 2a, 2b und den Hohlraum 3 aus der Blickrichtung A. Es hat sich gezeigt, daß sich mit einem derartig ausgebildeten Heizungsrohr, wenn es in an sich bekannter Weise in Schlangenlinien oder in Schleifen verlegt wird, ein Temperaturwelligkeit praktisch vermeiden läßt.

Fig. 5 zeigt ein Kunststoff- oder Metallrohr mit kreisrundem Innenquerschnitt mit nach oben und unten verstärkter Wand und darin eingebettetem Isolierspalt 6, der die Wärmeabgabe entsprechend der Erfindungsanforderung sicherstellt. Die Rohrenden zum Verteileranschluß sind gemäß Fig. .4 kreisrund angedreht, wodurch bekannte Schweiß- bzw. Quetsch- oder Schraubverbindungen sicher und einfach hergestellt werden können.

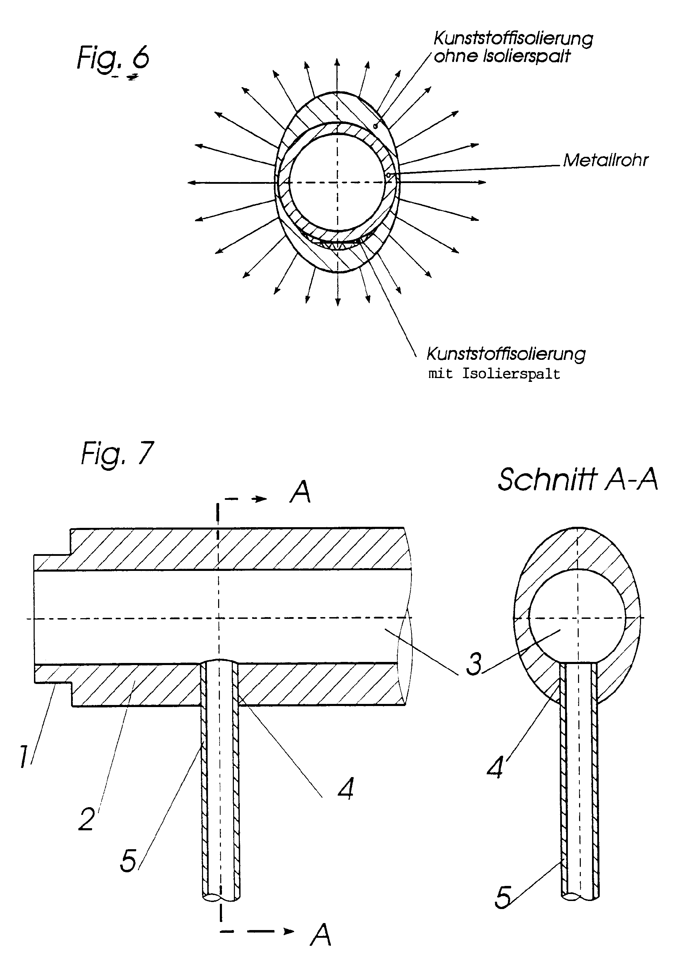

Fig. 6 zeigt ein Metallrohr mit kreisrundem Innenquerschnitt mit nach oben und unten aufgebrachter Kunststoffisolierung, die sowohl ohne und mit eingebettetem Isolierspalt ausgeführt sein kann, womit wiederum die Wärmeabgabe entsprechend der Erfindungsanforderung sichergestellt ist. Die Rohrenden zum Verteileranschluß sind gemäß Fig. 4 kreisrund angedreht, wodurch bekannte Schweiß- bzw. Quetsch- oder Schraubverbindungen sicher und einfach hergestellt werden können.

Die erfindungsgemäßen Heizungselemente können in alle bisher bekannten Befestigungsvorrichtungen, wie z.B. Rohrklipse, Rohrhalteschienen, Systemplatte, usw. nach den gültigen Normen bzw. heutigem Stand der Technik sowohl warm als auch kalt verlegt werden.

Durch Verstärkung desjenigen Bereiches des erfindungsgemäßen Heizungselementes, der der zu beheizenden Fläche abgewandt ist, kann einerseits der Wärmeverlust in den Boden verringert werden und andererseits können Anschlußstücke, wie Vor- und Rücklaufsammelrohre, dauerhaft mit den Heizungselementen verbunden (z.B. eingeschweißt) werden. Dies ist in Fig. 7 dargestellt, welche den Längs- und Querschnitt eines Kunststoffsammelrohres mit kreisrundem Hohlraum 3 und nach oben und unten vergrößerter Wandstärke zeigt. In diese verstärkte Rohrwand können Wärmeverteilrohre 5 in variablen Abständen an den nicht lösbaren Verbindungsstellen 4 senkrecht oder auch schräg eingesetzt werden. Dadurch ist es möglich, die Sammelrohre im Extrusionsverfahren mit sehr hoher Zeitstandfestigkeit und sehr kostengünstig, bei gleichzeitig sicherer Verbindungstechnik über die großen Verbindungsflächen 4, herzustellen. Der Übergang vom Sammelrohr zur Vor- bzw. Rücklaufleitung erfolgt durch kreisrundes Andrehen 1, wodurch gleichzeitig ein sicherer Anschlag für die unlösbare Verbindungstechnik geschaffen wird.

Das Einschweißen oder sonstige dauerhafte Verbinden von Wärmeverteilrohren in ein Vor- und ein Rücklaufsammelrohr ist deshalb von großer Bedeutung, weil durch Aufteilen des Heizwasserstromes aus einer Vorlaufleitung auf mehrere Wärmeverteilrohre entscheidende Vorzüge in bezug auf Druckverlust und Strömungsgeschwindigkeit entstehen. Geringer Druckverlust und geringe Strömungsgeschwindigkeit bewirken kleine energiesparende Umwälzpumpen und gleichzeitig geräuschlosen Betrieb.

Die bisher bekannten Verbindungstechniken, wie Stumpfverbindungen oder Einsetzen der Wärmeverteilrohre in Rohre relativ dünner Wandstärken bergen die Gefahr in sich, daß bei hoher Dauerbelastung die Verbindungsstellen undicht werden können. Kunststoffspritzgußteile wiederum haben eine geringere Zeitstandfestigkeit und Lebensdauer als extrudierte Kunststoffrohre gleicher Wandstärke.

Die Einschweiß- oder sonstige dauerhafte Verbindungstiefe sollte, um größtmögliche Sicherheit auf lange Sicht bieten zu können, in etwa den Durchmesser des eingesetzten Wärmeverteilrohres ausmachen. Ist z.B. ein Wärmeverteilrohr von 8 mm Durchmesser in das Sammelrohr eingesetzt, so sollte die Verbindungstiefe ca. 8 mm betragen.

Das erfindungsgemäße Heizungselement kann auch als Kühlelement für die Kühlung von Flächen verwendet werden, wobei eine gleichmäßige Kühlung der Flächen (Vermeidung der Temperaturwelligkeit) erzielt wird. Die Erfindung betrifft daher auch ein Kühlelement, welches die gleichen strukturellen Merkmale aufweist wie das erfindungsgemäße Heizungselement.

Die Erfindung betrifft weiters die Verwendung eines Heizungs-bzw. Kühlelementes zum Beheizen bzw. Kühlen von Flächen, wodurch z.B. ein Raum klimatisiert werden kann.

Mit folgendem Beispiel wird die Erfindung noch näher beschrieben.

### Beispiel

Es wurde ein Heizungselement aus Polypropylen mit einem in Fig. 3 gezeigten Querschnitt mittels herkömmlicher Extrudiertechnik mit folgenden Abmessungen hergestellt:
Wandstärke (mm) bei Ebene 0°: 2,0
Wandstärke (mm) bei Ebene 30°: 2,5
Wandstärke (mm) bei Ebene 60°: 3,5
Wandstärke (mm) bei Ebene 90°: 4,0
Innendurchmesser (mm) des rohrförmigen Hohlraumes: 20

Durch dieses Heizungselement wurde warmes Wasser (Vorlauftemperatur: 40°C; Durchsatz: 3 l/min) gepumpt und die sich am Innenrohr und an der Außenoberfläche des Mantels einstellenden Temperaturen gemessen.
Rohr-Innentemperatur: 40°C
Außentemperatur bei Ebene 0°: 38,23°C
Außentemperatur bei Ebene 30°: 37,92°C
Außentemperatur bei Ebene 60°: 37,35°C
Außentemperatur bei Ebene 90°: 37,07°C

Durch die Ausbildung verschiedener Wandstärken kann somit die Oberflächentemperatur des Heizungselementes und in weiterer Folge z.B. bei einer Fußbodenheizung die Wärmeabgabe am Oberboden so verändert werden, daß die Temperaturwelligkeit ausgeglichen wird.

Die Veränderung der Oberflächentemperatur an einem erfindungsgemäßen Heizungselement ist umso größer, je größer die unterschiedlichen Wandstärken bzw. der im Rohr eingebettete Isolierspalt ist (Fig. 6).

## Patentansprüche

1. Heizungselement zum Beheizen einer Fläche, welches Heizungselement einen Hohlraum (3) zum Transportieren eines Wärmeträgermediums und einen den Hohlraum (3) umschließenden Mantel (2) aus Kunststoff und/oder Metall aufweist, dadurch gekennzeichnet, daß der Mantel (2) an jenen Bereichen, welche nach Verlegen des Heizungselementes der zu beheizenden Fläche zu- bzw. abgewandt sind, stärker ausgeführt ist als an den anderen Bereichen, und/oder in diesen, der zu beheizenden Fläche zu- bzw. abgewandten Bereichen ein Material vorgesehen ist, welches ein schlechter Wärmeleiter (6) ist.

2. Heizungselement nach Anspruch 1, dadurch gekennzeichnet, daß es im Querschnitt oval oder elliptisch ausgebildet ist.

3. Heizungselement nach einem der Ansprüche 1 oder 2, dadurch gekennzeichnet, daß der Hohlraum (3) im Querschnitt kreisförmig ausgebildet ist.

4. Flächenheizung mit Heizungselementen nach einem oder mehreren der Ansprüche 1 bis 3.

5. Kühlelement zum Kühlen einer Fläche, welches Kühlelement einen Hohlraum (3) zum Transportieren eines Kühlmediums und einen den Hohlraum (3) umschließenden Mantel (2) aus Kunststoff und/oder Metall aufweist, dadurch gekennzeichnet, daß der Mantel (2) an jenen Bereichen, welche nach Verlegen des Kühlelementes der zu kühlenden Fläche zu- bzw. abgewandt sind, stärker ausgeführt ist als an den anderen Bereichen, und/oder in diesen, der zu kühlenden Fläche zu- bzw. abgewandten Bereichen ein Material vorgesehen ist, welches ein schlechter Wärmeleiter (6) ist.

6. Verwendung eines Heizungs- bzw. Kühlelementes nach einem oder mehreren der Ansprüche 1 bis 3 und 5 zum Beheizen bzw. Kühlen von Flächen.

## Claims

1. Heating element for heating a surface wherein the heating element has a cavity (3) for the transport of a heat transfer medium and a sheath (2) surrounding the cavity composed of plastic and/or metal, characterised in that, in those regions which face towards or away from the surface to be heated when the heating element is installed, the sheath (2) is designed thicker than in other regions, and/or in these regions which face towards or away from the surface to be heated a material is provided which is a poorer heat conductor (6).

2. Heating element in accordance with Claim 1, characterised in that, it is designed with the cross-section shaped as an oval or as an ellipse.

3. Heating element in accordance with one of the Claims 1 or 2, characterised in that, the cavity (3) is designed circular in cross-section.

4. Surface heating with heating elements in accordance with one or more of the Claims 1 to 3.

5. Cooling element for cooling a surface wherein the cooling element has a cavity (3) for the transport of a cooling medium and a sheath (2) surrounding the cavity composed of plastic and/or metal, characterised in that, in those regions which face towards or away from the surface to be cooled when the cooling element is installed, the sheath (2) is designed thicker than in other regions, and/or in these regions which face towards or away from the surface to be cooled a material is provided which is a poorer heat conductor (6).

6. Use of a heating or a cooling element respectively in accordance with one or more of the Claims 1 to 3 and 5 for the heating and cooling respectively of surfaces.

## Revendications

1. Elément chauffant, pour le chauffage d'une surface, présentant une cavité (3), pour le transport d'un fluide caloporteur, et une enveloppe (2) en matière synthétique et/ou en métal, enclosant la cavité (3), caractérisé en ce que, sur les zones qui, après pose de l'élément chauffant, sont tournées vers, respectivement opposées à, la surface à chauffer, l'enveloppe (2) est dotée d'une épaisseur plus forte que sur les autres zones, et/ou dans ces zones, tournées vers, et/ou opposées à, la surface à chauffer, est prévu un matériau (6) mauvais conducteur de la chaleur.

2. Elément chauffant selon la revendication 1, caractérisé en ce qu'il est de section transversale ovale ou elliptique.

3. Elément chauffant selon l'une des revendications 1 ou 2, caractérisé en ce que la cavité (3) est de section transversale circulaire.

4. Chauffage par surfaces étendues, avec des éléments chauffants selon une ou plusieurs des revendications 1 à 3.

5. Elément refroidissant, pour refroidir une surface, ledit élément refroidissant présentant une cavité (3), pour le transport d'un fluide réfrigérant, et une enveloppe (2) en matière synthétique et/ou en métal, enclosant la cavité (3), caractérisé en ce que, sur les zones qui, après pose de l'élément refroidissant, sont tournées vers, respectivement opposées à, la surface à refroidir, l'enveloppe (2) est dotée d'une épaisseur plus forte que sur les autres zones, et/ou dans ces zones, tournées vers, et/ou opposées à, la surface à refroidir, est prévu un matériau (6) mauvais conducteur de la chaleur.

6. Utilisation d'un élément chauffant, respectivement refroidissant selon une ou plusieurs des revendications 1 à 3 et 5, pour chauffer, respectivement refroidir des surfaces.
